# EUROPEAN PATENT APPLICATION

(11) **EP 4 151 063 A1**
(43) Date of publication of application: **22.03.2023**
(21) Application number: 22193933.3
(22) Date of filing: 05.09.2022
(51) Int. Cl.: A01B 69/04, A01D 41/127, G05D 1/00

(54) **AUTOMATIC TRAVELING METHOD, WORK VEHICLE, AND AUTOMATIC TRAVELING SYSTEM**

(30) Priority: 16.09.2021 JP 2021150935
(71) Applicant: Yanmar Holdings Co., Ltd., Osaka-shi, Osaka (JP)
(72) Inventor: LEE, Seungkyu, Okayama (JP); NAKAHIRA, Taketoshi, Okayama (JP); MURAYAMA, Masaaki, Okayama (JP); OMORI, Yasunori, Osaka (JP)
(74) Representative: Novagraaf International SA

(57) **Abstract**

[Problem] To provide an automatic traveling method, a work vehicle, and an automatic traveling system capable of simplifying an operation and improving workability.

[Solution] A combine harvester 1 is provided with a controller 50, and the controller 50 functions as an automatic traveler 55 and a switch 57. The automatic traveler 55 executes the automatic traveling of the combine harvester 1 in the automatic straight work. The switch 57 switches automatic traveling of the combine harvester 1 to manual traveling, during the performing of the automatic traveling, when detecting a shift from an unmowed area to an already mowed area.

## Description

### TECHNICAL FIELD

The present invention relates to automatic traveling method, a work vehicle and automatic traveling system that can switch between manual traveling and automatic traveling.

### BACKGROUND ART

Conventionally, a work vehicle such as a combine harvester is so configured as to enable manual traveling that accords to an operation of a steering wheel or the like, while enabling automatic traveling based on a preset traveling route or the like.

For example, an agricultural work instrument disclosed in Patent Document 1 is provided with a traveling machine that can switch between manual traveling by manual steering and automatic traveling by automatic steering along a set traveling line set parallel to a reference traveling line, and a switch that can switch between the manual traveling and the automatic traveling.

### PRIOR ART DOCUMENT

### PATENT DOCUMENT

Patent Document 1: Japanese Unexamined Patent Application Publication No. 2017-123803

### SUMMARY OF INVENTION

### TECHNICAL PROBLEM

By the way, the conventional work vehicle described above, when switching from the automatic traveling to the manual traveling, is sometimes accompanied by an operation to change the traveling state or work state during the automatic traveling to another state, and in this case, in addition to the switching operation, which uses the switching switch, to the manual traveling as described above, the operation to change the traveling state or the work state needs to be performed, making the operation complicated. For example, when the work vehicle works to the end of one stroke of an un-mowed area in the automatic traveling, and then moves to another stroke, it is necessary to raise a work instrument from the a work position to a standby position, so in addition to the switching operation from the automatic traveling to the manual traveling, it is also necessary to perform an upward operation of the work instrument, and further, a turning operation or a speed change operation is, as the case may be, performed. In the above, a worker is required to perform a complicated operation at the end of the work in the stroke, placing a burden on the worker and reducing workability.

It is an object of the present invention to provide an automatic traveling method, a work vehicle, and an automatic traveling system capable of simplifying an operation and improving workability.

### SOLUTION TO PROBLEM

For solving the above problem, an automatic traveling method of the present invention is an automatic traveling method of a work vehicle provided with a work instrument, including: an automatic traveling step that performs automatic traveling of the work vehicle in an automatic straight work; and, a switching step that switches the automatic traveling of the work vehicle to manual traveling, during the performing of the automatic traveling, when detecting a shift from an unworked area to an already worked area.

For solving the above problem, a work vehicle of the present invention is a work vehicle provided with a work instrument, including: an automatic traveler that performs automatic traveling of the work vehicle in an automatic straight work along a predetermined set traveling line; and a switch that switches the automatic traveling of the work vehicle to manual traveling, during the automatic traveling, when detecting a shift from an unworked area to an already worked area.

For solving the above problem, an automatic traveling system of the present invention is an automatic traveling system of a work vehicle provided with a work instrument, including: an automatic traveler that performs automatic traveling of the work vehicle in an automatic straight work along a predetermined set traveling line; and a switch that switches the automatic traveling of the work vehicle to manual traveling, during the performing of the automatic traveling, when detecting a shift from an unworked area to an already worked area.

### ADVANTAGEOUS EFFECTS OF INVENTION

The present invention provides an automatic traveling method, a work vehicle, and an automatic traveling system capable of simplifying an operation and improving workability.

### BRIEF DESCRIPTION OF DRAWINGS

FIG. 1 is a side view of an example where a mower of a combine harvester according to one embodiment of a work vehicle of the present invention is placed in a work position.
FIG. 2 is a side view of the example where the mower of the combine harvester according to the one embodiment of the work vehicle of the present invention is placed in a standby position.
FIG. 3 is a plan view of a steerer of the combine harvester according to the one embodiment of the work vehicle of the present invention.
FIG. 4 is a front view of a part of a main speed change lever of the combine harvester according to the one embodiment of the work vehicle of the present invention.
FIG. 5 is a block diagram of the combine harvester according to the one embodiment of the work vehicle of the present invention.
FIG. 6 is a flowchart showing an example of a traveling operation of the combine harvester according to the one embodiment of the work vehicle of the present invention.

### DESCRIPTION OF EMBODIMENTS

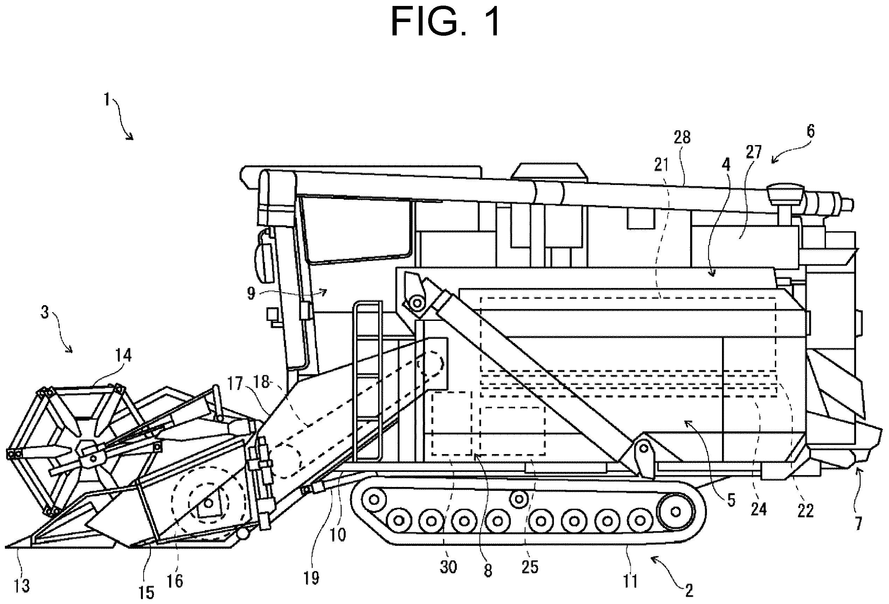

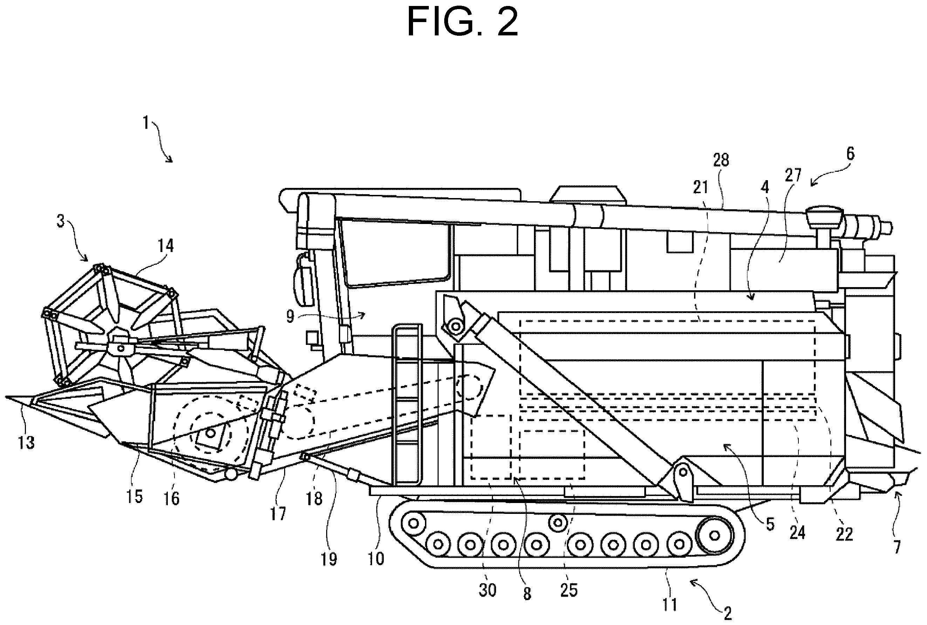

Now, a combine harvester 1, as a work vehicle according to an embodiment of the present invention, will be described with reference to FIG. 1, FIG. 2, etc. With a self-driving or manual operation, the combine harvester 1 travels in a to-be-worked-on farm field, and performs mowing and any other work so as to harvest crops from grain culms planted in the farm field. The combine harvester 1 is configured to perform, for example, an automatic work (automatic straight work) in which the steering is controlled by automatic driving while the traveling speed is controlled in response to a manual operation, or an unmanned operation in which the steering and the traveling speed are controlled by the automatic driving, making it possible to autonomously travel, turn, and work in the farm field.

The combine harvester 1 is set to a traveling mode of any of a manual traveling mode and an automatic traveling mode. The combine harvester 1 is so configured as to perform, when being set to the manual traveling mode, the manual traveling according to steering of a steerer 9 by a worker.

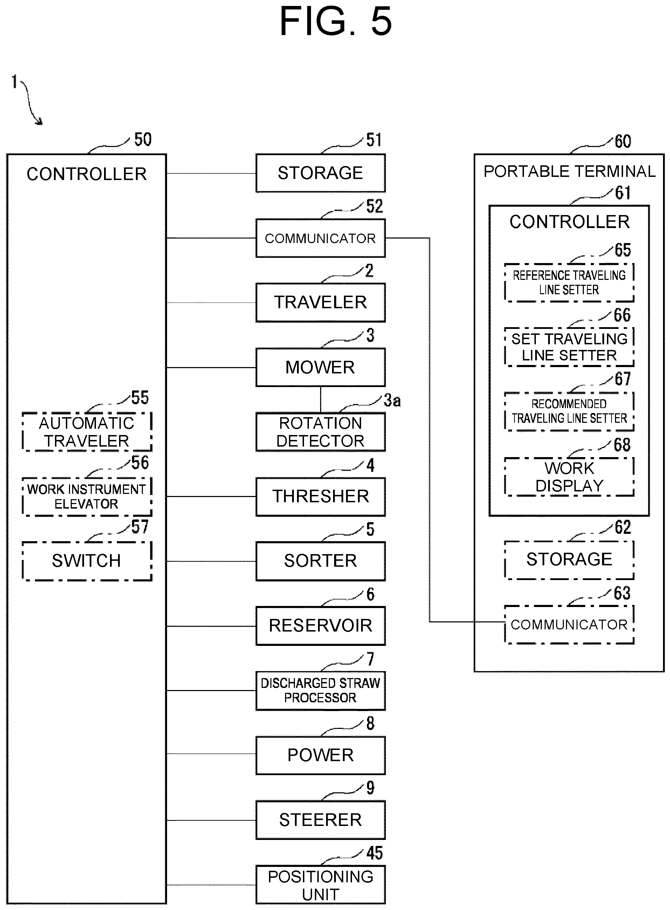

Meanwhile, the combine harvester 1 is so configured as to perform, when being set to the automatic traveling mode, the automatic straight work for automatically mowing while automatically traveling along a set traveling line parallel to a predetermined reference traveling line, or automatic mowing traveling for automatically mowing while automatically traveling according to a preset traveling route. The set traveling line and the traveling route are created by a portable terminal 60 (see FIG. 5) capable of communicating with the combine harvester 1, and the combine harvester 1 receives a set traveling line and a traveling route from the portable terminal 60.

As shown in FIG. 1 and FIG. 2, the combine harvester 1 is provided with a traveler 2, a mower 3, a thresher 4, a sorter 5, a reservoir 6, a discharged straw processor 7, a power 8, and a steerer 9, and constitutes a so-called normal combine harvester. While traveling by the traveler 2, the combine harvester 1 threshes, by the thresher 4, grain culms mowed by the mower 3, sorts the grains by the sorter 5, and stores the grains in the reservoir 6. The combine harvester 1 causes the discharged straw processor 7 to process threshed discharged straws. The combine harvester 1 drives the traveler 2, the mower 3, the thresher 4, the sorter 5, the reservoir 6, and the discharged straw processor 7 by power supplied by the power 8.

The traveler 2 is provided below a machine body frame 10, and includes a pair of crawler type travelers 11 on right and left side and a transmission (not shown). Turning the crawler of the crawler type traveler 11 by the power (e.g., rotation power) transmitted from an engine 30 of the power 8, the traveler 2 causes the combine harvester 1 to travel in a forward-rearward direction or to turn to a left-right direction. The transmission transmits the power (rotational power) of the power 8 to the crawler type traveler 11, and can change the speed of the rotational power.

The mower 3 is a work instrument that performs work on the to-be-worked-on farm field, is installed in front of the traveler 2, and mows a predetermined mowing width of grain culms in the farm field's unworked area as an area having un-mowed grain culms (hereinafter referred to as un-mowed area). The mower 3 is provided with a divider 13, a scraping reel 14, a mowing blade 15, a scraping auger 16, a feeder house 17, and a conveyor 18. The mower 3 is provided with a rotation detector 3a that detects the rotary work's rotational speed (work speed) for the mowing work (see FIG. 5). The rotation detector 3a includes a rotation sensor that detects, for example, a rotational speed of the scraping reel 14, a rotational speed of the scraping auger 16, and a rotational speed of the conveyor 18.

The divider 13 is provided protruding forward from the left front end and right front end of the mower 3, and guides grain culms in the un-mowed area within the mowing width. The scraping reel 14 is located behind the divider 13, and is rotatable around a rotation axis extending in the left-right direction. The scraping reel 14 is driven by rotation so as to assist in mowing the grain culms guided by the divider 13, thereby to scrape the tip side of the grain culms while causing the grain culms to stand. The mowing blade 15 is positioned below the scraping reel 14, and cuts the culm end side of the grain culm scraped by the scraping reel 14 thereby to mow the grain culm.

The scraping auger 16 is located behind the scraping reel 14 and mowing blade 15, and is provided rotatable around a rotation axis extending in the left-right direction. The scraping auger 16 is driven by rotation thereby to scrape the grain culms mowed by the mowing blade 15 and convey the grain culms rearward.

The feeder house 17 extends forward from the machine body frame 10 to be positioned behind the scraping auger 16, and is supported by the machine body frame 10 in an elevatable manner. The feeder house 17 raises and lowers, thereby to raise and lower the divider 13, the scraping reel 14, the mowing blade 15 and the scraping auger 16, i.e., raising and lowering the mower 3.

The combine harvester 1, At the machine body frame 10, is provided with an elevator 19 that raises and lowers the feeder house 17 thereby to raise and lower the mower 3, and raises and lowers the mower 3 between the lower work position (see FIG. 1) and the upper standby position (see FIG. 2). The elevator 19 includes, for example, a hydraulic cylinder powered by the engine 30.

The conveyor 18 is rotatably provided within the feeder house 17, and moves as the feeder house 17 raises and lowers. The conveyor 18 is driven by rotation thereby to convey the grain culms, which were conveyed into the feeder house 17 by the scraping auger 16, further rearward to the thresher 4.

The thresher 4 is provided behind the feeder house 17 of the mower 3, and threshes the grain culms conveyed from the feeder house 17. The thresher 4 is provided with a handling drum 21 and a receiving net 22. The handling drum 21 threshes grains from the grain culms conveyed from the feeder house 17, and conveys the threshed grain culms, that is, discharged straw, to the discharged straw processor 7. The receiving net 22 supports the grain culms conveyed by the handling drum 21, and sifts and drops the grains.

The sorter 5 is provided below the thresher 4. The sorter 5 includes a swing sorter 24, an air blast sorter 25, a grain conveyor (not shown), and a straw dust discharger (not shown). The swing sorter 24 sifts a threshed matter that falls from the thresher 4 thereby to sort the threshed matter into grain, straw dust, etc. Into the grain, straw dust, etc., the air blast sorter 25, with an air blast, further sorts the threshed matter having fallen from the thresher 4 and the threshed matter sorted by the swing sorter 24. To the reservoir 6, the grain conveyor conveys the grain sorted by the swing sorter 24 and the air blast sorter 25. To outside the machine, the straw dust discharger discharges the straw dust or the like other than the grains sorted by the swing sorter 24 and the air blast sorter 25.

The reservoir 6 is provided on the right side of the thresher 4. The reservoir 6 includes a grain tank 27 and a grain discharger 28. The grain tank 27 reserves the grain conveyed from the sorter 5. The grain discharger 28 is composed of a discharging auger or the like, and discharges, to any place, the grain tanked in the grain tank 27.

The discharged straw processor 7 is provided behind the thresher 4. The discharged straw processor 7 includes a discharged straw conveyor (not shown) and a discharged straw cutter (not shown). The discharged straw processor 7, by the discharged straw conveyor, conveys the discharged straws, which are conveyed from the thresher 4, to the discharged straw cutter, cuts the straws by the discharged straw cutter, and discharges the straws to behind the combine harvester 1.

The power 8 is provided above the traveler 2 and below the reservoir 6. The power 8 includes the engine 30 that generates the rotational power. To the traveler 2, the mower 3, the thresher 4, the sorter 5, the reservoir 6, and the discharged straw processor 7, the power 8 sends the rotational power generated by the engine 30. Further, the combine harvester 1 is provided with a fuel tank to tank a fuel to be supplied to the engine 30 of the power 8.

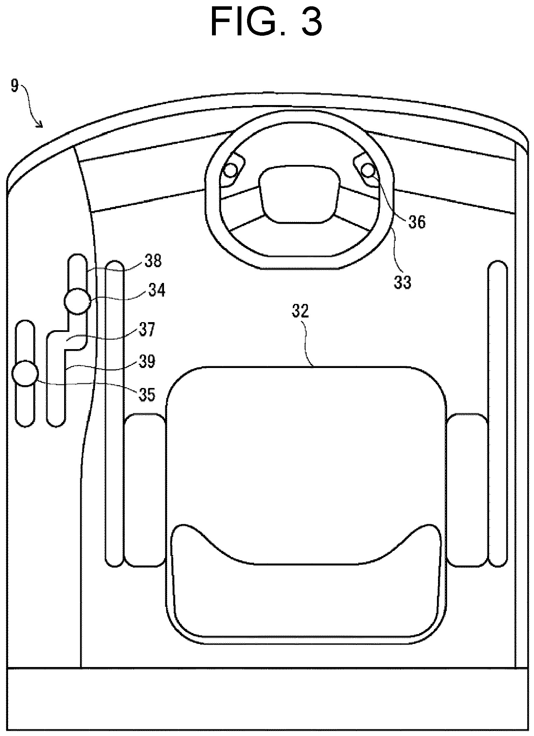

The steerer 9 is provided above the power 8. As shown in FIG. 3, around a driver seat 32 on which the worker is seated, the steerer 9 is provided with operation tools for steering the combine harvester 1. The steerer 9 includes, as the operation tools, a steering wheel 33 as a turning operation tool to instruct the machine body of the combine harvester 1 to turn, a main speed change lever 34 and an auxiliary speed change lever 35 each of which is a speed changing tool to instruct the combine harvester 1 to make a forward-rearward speed change, an override button 36 for switching the automatic traveling of the combine harvester 1 to the manual traveling, and the like. The manual traveling of the combine harvester 1 is performed by the traveler 2 that has received operations of the steering wheel 33, main speed change lever 34 and auxiliary speed change lever 35 of the steerer 9. Also, the steerer 9 includes a mechanism for operating the mowing work by the mower 3, the threshing work by the thresher 4, the discharging work by the grain discharger 28 of the reservoir 6, and the like. In addition, the steerer 9 includes a display (not shown) such as a monitor to display various information and output the information to the worker.

The steering wheel 33 transmits a turning operation by the worker to the traveler 2 thereby to change a movement direction of the combine harvester 1, that is, operates the combine harvester 1 to turn. For example, during the performing of the manual traveling of the combine harvester 1, the traveler 2 ordinarily receives the steering wheel 33's turning operation by the worker. Meanwhile, during the performing of the automatic traveling of the combine harvester 1, the traveler 2 ordinarily does not receive the steering wheel 33's turning operation by the worker, but receives the steering wheel 33's turning operation with a predetermined override operation performed. The steering wheel 33 is so configured as to have a margin of about ±5 degrees along a rotational direction, and not to transmit, to the traveler 2, any operation within this margin. The margin of the steering wheel 33 is not limited to ±5 degrees and can be artificially adjusted.

The main speed change lever 34 and the auxiliary speed change lever 35 transmit the speed change operation by the worker to the traveler 2, thereby to switch a set speed of the traveling of the combine harvester 1. For example, when the manual traveling mode is set, the main speed change lever 34, when being in a center neutral position 37, switches the transmission to neutral thereby to stop the combine harvester 1.

The main speed change lever 34, when tilted to a forward speed change area 38 on a front side of the neutral position 37, transmits a forward traveling operation of the combine harvester 1 to the traveler 2, and sets, to the traveler 2, a forward set speed that is based on a forward operation amount that accords to the forward-rearward position of the main speed change lever 34 in the forward speed change area 38, and based on a set vehicle speed set by the portable terminal 60. The main speed change lever 34, when tilted forward within the forward speed change area 38, increases the forward set speed, while when tilted rearward within the forward speed change area 38, decreases the forward set speed. A forward set vehicle speed is set within the range of 0 to 100%, and different vehicle speeds can be set between the manual traveling and the automatic traveling. For example, with the set vehicle speed of 50% and the forward operation amount of 2 m/s, the forward set speed is set to 1 m/s. The combine harvester 1 may start the automatic traveling on a condition that the main speed change lever 34 is positioned in the forward speed change area 38.

Meanwhile, the main speed change lever 34, when tilted to a rearward speed change area 39 on a rear side of the neutral position 37, transmits a rearward traveling operation of the combine harvester 1 to the traveler 2, and sets, to the traveler 2, a rearward set speed that is based on a rearward operation amount that accords to the forward-rearward position of the main speed change lever 34 in the rearward speed change area 39, and based on the set vehicle speed set by the portable terminal 60. The main speed change lever 34, when tilted rearward within the rearward speed change area 39, increases the rearward set vehicle speed, while when tilted forward within the rearward speed change area 39, decreases the rearward set vehicle speed. A rearward set vehicle speed is set within the range of 0 to 100%, and different vehicle speeds can be set between the manual traveling and the automatic traveling.

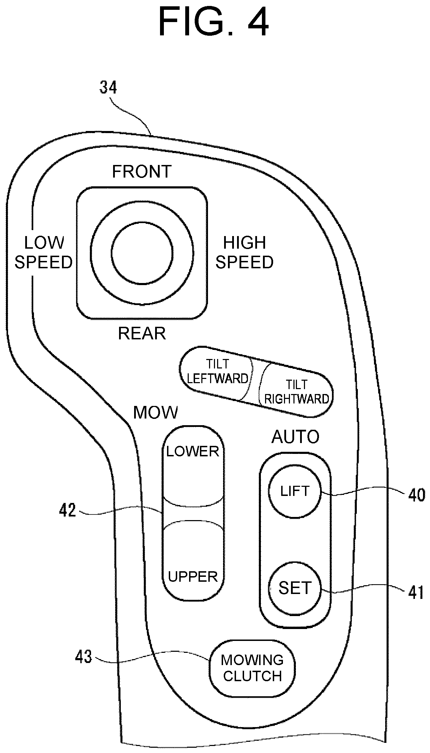

Also, the main speed change lever 34 has various operation buttons, for example, as shown in FIG. 4, an auto lift button 40, an auto set button 41, a mowing up-down button 42, and a mowing clutch button 43.

Operating the auto lift button 40 transmits an auto lift operation to the mower 3, thereby to upward control the mower 3 to the standby position according to the auto lift operation. Operating the auto set button 41 transmits an auto set operation to the mower 3, thereby to upward control the mower 3 to the work position according to the auto set operation. The standby position is initially set at an upper predetermined position and the work position is initially set at a lower predetermined position; the work position can be changed to the upper or lower side of the initial position depending on the worker's operation of the mowing up-down button 42, etc.

Operating the mowing up-down button 42 transmits an upward operation or a downward operation to the mower 3, thereby to upward control the mower 3 during when the mowing up-down button 42 is upward operated, and meanwhile to downward control the mower 3 during when the mowing up-down button 42 is down operated. Operating the mowing clutch button 43 transmits a transmitting operation or shutting-off operation of the power to the mower 3, thereby to transmit power to the mower 3 in response to the transmitting operation of the mowing clutch button 43, and meanwhile to shut off the power to the mower 3 in response to the shutting-off operation of the mowing clutch button 43.

As shown in FIG. 5, the combine harvester 1 includes a positioning unit 45 that uses a satellite positioning system such as GPS thereby to obtain position information (own position) of the combine harvester 1. The positioning unit 45 receives a positioning signal from a positioning satellite via a positioning antenna, and based on the positioning signal, obtains position information of the positioning unit 45, that is, position information of the combine harvester 1.

Next, a controller 50 of the combine harvester 1 is described with reference to FIG. 5. The controller 50 is connected to a storage 51 that is composed of a computer such as CPU and includes ROM, RAM, hard disk drive, flash memory and the like, and to a communicator 52 that communicates with an external instrument.

The storage 51 stores programs and data for controlling various components and various functions of the combine harvester 1, and the controller 50 performs arithmetic operations based on the programs and data stored in the storage 51 thereby to control the various components and various functions. The controller 50 controls the positioning unit 45 thereby to obtain the position information of the combine harvester 1, for example.

Via a wireless communication antenna, the communicator 52 is capable of making a wireless communication with the external instrument such as the portable terminal 60 held by the worker. The controller 50 controls the communicator 52 thereby to perform the wireless communication with the portable terminal 60, and sends and receives various information to and from the portable terminal 60.

Also, the controller 50 performs the program stored in the storage 51, thereby to operate as an automatic traveler 55, a work instrument elevator 56, and a switch 57. The automatic traveler 55, the work instrument elevator 56, and the switch 57 realize an automatic traveling step, work instrument elevating step, and switching step of the automatic traveling method of the present invention. The controller 50, with the positioning unit 45, positions the position information on the combine harvester 1, thereby to realize an own position detecting step for detecting an own position of the combine harvester 1.

The automatic traveler 55 controls the traveler 2 and the mower 3 in a manner to perform the automatic straight work that automatically mows while automatically traveling along the set traveling line parallel to the predetermined reference traveling line set for the farm field, and the automatic mowing traveling that automatically mows while automatically traveling along a preset traveling route. The present embodiment describes an example of performing the automatic straight work. For example, the automatic traveler 55 obtains the set traveling line from the portable terminal 60 and, based on the position information of the combine harvester 1 positioned by the positioning unit 45, controls the power 8, the traveler 2, and the mower 3 so that the combine harvester 1 performs the automatic straight work along the set traveling line.

In response to the upward/downward operation by the operation tool of the steerer 9, the work instrument elevator 56 executes upward/downward control of the mower 3 as the work instrument. When the mower 3 is located below the standby position, for example, the work instrument elevator 56 transmits the auto lift operation to the mower 3 according to the operation by the auto lift button 40, and upward controls the mower 3 to the standby position. When the mower 3 is located above or below the work position, the work instrument elevator 56 transmits the auto set operation to the mower 3 according to the operation by the auto set button 41, and downward or upward controls the mower 3 to the work position. The work instrument elevator 56 transmits the upward operation or downward operation to the mower 3 according to the operation of the mowing up-down button 42, and upward or downward controls the mower 3 to the work position.

The switch 57 realizes an override function to switch the combine harvester 1 to the manual traveling or the automatic traveling; when detecting that the combine harvester 1 has mowed and passed through the un-mowed area (unworked area) and moved from the un-mowed area to the already mowed area (already worked area), the switch 57 switches the automatic traveling of the combine harvester 1 to the manual traveling. The switch 57 switches the combine harvester 1 to the manual traveling or the automatic traveling based on the operation of the override button 36 or based on the upward/downward operation or upward/downward control of the mower 3; when the combine harvester 1 is automatically traveling, the switch 57 detects the shift from the un-mowed area to the already mowed area in response to the operation of the override button 36, and switches the automatic traveling of the combine harvester 1 to the manual traveling. Hereafter, description will be given about the override function where the switch 57 detects the shift from the un-mowed area to the already mowed area in response to the upward-downward operation and upward-downward control of the mower 3 during automatic traveling and switches the automatic traveling of the combine harvester 1 to the manual traveling. For example, during the performing of the automatic traveling by the combine harvester 1, when the work instrument elevator 56 performs the upward operation of the mower 3 or executes the raising control that is based on the upward operation, the switch 57 detects the shift from the un-mowed area to the already mowed area, and the automatic traveling of the combine harvester 1 to the manual traveling.

Here, the upward operation may be an upward operation by the auto lift button 40, and the switch 57 may switch the automatic traveling of the combine harvester 1 to the manual traveling in response to the auto lift operation of the auto lift button 40, or to the control of raising the mower 3 to the standby position, which control is based on the auto lift operation. The upward operation may be performed by the upward operation by the mowing up-down button 42, and the switch 57 may switch the automatic traveling of the combine harvester 1 to the manual traveling when the mower 3 is upward controlled to a predetermined height or more by the upward operation of the mowing up-down button 42. Thus, when being able to determine, based on the upward-downward operation and upward-downward control of the mower 3, that the combine harvester 1 has worked to the end of one stroke in the un-mowed area by the automatic traveling, or when detecting the end of the stroke work by any other means, the switch 57 switches the automatic traveling of the combine harvester 1 to the manual traveling.

As a first operation example of the override function; after the switch 57 switches the automatic traveling of the combine harvester 1 to the manual traveling, if the steerer 9's predetermined operation using the operation tool, for example, the turning operation or the speed change operation, is not performed for a predetermined time or a predetermined distance, the controller 50 may control the traveler 2 in a manner to decelerate or stop the manual traveling of the combine harvester 1. Meanwhile, if the predetermined operation is performed during the predetermined time or the predetermined distance, the controller 50 maintains the combine harvester 1 in the manual operation.

Here, the predetermined time or the predetermined distance may be a value initially set in advance or a value arbitrarily set according to the worker's operation of the portable terminal 60. The turning operation may be set, for example, to a turning operation that is seen when the steering wheel 33 is turned more than or equal to a predetermined angle threshold or when a turning radius is detected to be less than or equal to a predetermined radius threshold, and the speed change operation may be set to a speed change operation that is seen when the main speed change lever 34's tilting to the forward speed change area 38 or to the rearward speed change area 39 is detected. Decelerating of the manual traveling may be done by gradually or stepwise reducing the traveling speed, regardless of the position of the main speed change lever 34. Stopping of the manual traveling may be done by gradually or stepwise reducing the traveling speed to converge to zero, by switching the transmission to neutral, or by stopping the engine 30, regardless of the position of the main speed change lever 34.

The determination of whether or not the turning operation or the speed change operation has been performed for the predetermined time or predetermined distance may be done by the controller 50, or may be done by the portable terminal 60 with a result of the determination sent to the controller 50. If the manual traveling of the combine harvester 1 is to be decelerated or stopped due to absence of the turning operation or speed change operation, a display of the steerer 9 or the portable terminal 60 may be used to notify the worker to that effect.

As a second operation example of the override function; when the upward operation or raising control of the mower 3 is performed during the performing of the automatic traveling, the controller 50 may control the traveling depending on whether the movement direction of the combine harvester 1 is the un-mowed area or the already mowed area. For example, when the upward operation of the mower 3 is performed during the performing of the automatic traveling, if the front of the own position of the combine harvester 1 is the already mowed area, the work instrument elevator 56 upward controls the mower 3 based on the upward operation, and the switch 57 switches the automatic traveling to the manual traveling. Meanwhile, if the front of the own position of the combine harvester 1 is the un-mowed area, the controller 50 stops the combine harvester 1 from traveling; in this case, the controller 50 may upward control the mower 3 based on the upward operation, or may not upward control the mower 3 regardless of the upward operation.

Here, the controller 50 grasps the own position of the combine harvester 1 in the farm field based on the position information of the combine harvester 1 positioned by the positioning unit 45, and grasp the movement direction of the combine harvester 1. Also, the controller 50 determines whether the front of the own position of the combine harvester 1 is the un-mowed area or the already mowed area based on the un-mowed area data and already mowed area data of the farm field information held by the portable terminal 60. The controller 50 may determine whether the front of the own position of the combine harvester 1 is the un-mowed area or the already mowed area by analyzing the farm field's image data taken by a camera provided for the combine harvester 1 or portable terminal 60. Stopping of the traveling may be done by switching the transmission to neutral or by stopping the engine 30, regardless of the position of the main speed change lever 34.

The determination of whether the front of the own position of the combine harvester 1 is the un-mowed area or the already mowed area may be done by the controller 50, or by the portable terminal 60 with the result of the determination sent to the controller 50. When the combine harvester 1 is to be stopped because the front of the combine harvester 1 is the un-mowed area, the display of the steerer 9 or the portable terminal 60 may be used to notify the worker to that effect.

Next, the present embodiment describes a return function, which, contrary to the above override function described, switches the manual traveling of the combine harvester 1 to the automatic traveling based on the upward-downward operation and upward-downward control of the mower 3. For example, when the combine harvester 1 sets the reference traveling line for the farm field and also performs the automatic straight work along the set traveling line parallel to the reference traveling line, the combine harvester 1, with the mower 3 raised to the standby position, manually travels toward the end portion of the un-mowed area.

At this time, as a first operation example of the return function, with the movement direction of the combine harvester 1 in a state of being within a predetermined angle relative to the traveling direction of the reference traveling line, performing the downward operation to place the mower 3 in the work position or the downward control that is based on the downward operation allows the switch 57 to switch the manual traveling to the automatic traveling. Meanwhile, with the movement direction of the combine harvester 1 in a state of not being within the predetermined angle relative to the traveling direction of the reference traveling line, the manual traveling of the combine harvester 1 is maintained regardless of the downward operation or downward control of the mower 3.

Here, the predetermined angle may be a value initially set in advance or a value arbitrarily set according to the operation of the portable terminal 60 by the worker. The downward operation may be a downward operation by the auto set button 41, and the switch 57 may switch the manual traveling of the combine harvester 1 to the automatic traveling in response to the auto set operation or to the control that is based on the auto set operation and that is downward to the work position of the mower 3. Also, the downward operation may be performed by the downward operation by the mowing up-down button 42, and the switch 57 may switch the manual traveling of the combine harvester 1 to the automatic traveling when the mower 3 is downward controlled to the work position by the downward operation of the mowing up-down button 42. In the switched automatic traveling, the automatic traveler 55 performs the automatic straight traveling along the set traveling line parallel to the reference traveling line; for example, the portable terminal 60 may, from the combine harvester 1, obtain the position information of the combine harvester 1 positioned by the positioning unit 45, and set the set traveling line based on the position information and reference traveling line of the combine harvester 1.

The determination of whether or not the movement direction of the combine harvester 1 is within the predetermined angle relative to the traveling direction of the reference traveling line may be done by the controller 50, or may be done by the portable terminal 60 with determination results thereof sent to the controller 50.

As a second operation example of the return function, the combine harvester 1, for the un-mowed area, sets a recommended traveling line parallel to the reference traveling line. Then, when the downward operation to place the mower 3 in the work position or the downward control that is based on the downward operation is performed and the switch 57 switches the manual traveling of the combine harvester 1 to the automatic traveling, the combine harvester 1, when being within the predetermined range from the recommended traveling line in a direction orthogonal to the traveling direction of the reference traveling line, sets the recommended traveling line as the set traveling line. The automatic traveler 55 performs the automatic traveling (automatic straight work) along the set traveling line as the recommended traveling line. Meanwhile, when the combine harvester 1 is not within the predetermined range from the recommended traveling line, the automatic traveler 55 automatically travels (automatic straight work) along the set traveling line that is based on the own position of the combine harvester 1, for example.

Here, the recommended traveling line may be set, for example, in a stroke with a start point at the left rear end of the un-mowed area based on the traveling direction of the reference traveling line. The predetermined range may be a preset initial value, or a value arbitrarily set according to the worker's operation of the portable terminal 60. The predetermined range may be set to several tens of centimeters depending on the width of the mower 3 of the combine harvester 1; when the width of the mower 3 of the combine harvester 1 is 3 m, for example, the predetermined range may be set to about 50 cm.

The determination of whether or not the combine harvester 1 is within the predetermined range of the recommended traveling line may be made by the controller 50, or may be made by the portable terminal 60 with the result of the determination sent to the controller 50. When the recommended traveling line based on the un-mowed area is set, the combine harvester 1's own position and the recommended traveling line, in a state of overlapping a farm field map displayed on the display of the steerer 9 and on the portable terminal 60, may be displayed. Further, the worker is allowed to select, in the automatic straight work, whether to use the recommended traveling line that is based on the un-mowed area or the set traveling line that is based on the combine harvester 1's own position, and this selection may be made in advance before starting of the automatic straight work, or may be made at the time of setting the recommended traveling line.

The portable terminal 60 is one of the components of the combine harvester 1 and can remotely operate the combine harvester 1; for example, the portable terminal 60 includes a tablet terminal provided with a touch screen, a laptop personal computer, or the like. Also, any operator similar to the portable terminal 60 may be provided in the steerer 9. In the present invention, the combine harvester 1 and the portable terminal 60 constitute the automatic traveling system.

As shown in FIG. 5, the portable terminal 60 has a controller 61 composed of a computer such as a CPU, and the controller 61 is connected to a storage 62 such as ROM, RAM, hard disk drive and flash memory, and to a communicator 63 that communicates with the external instrument. Also, the portable terminal 60 includes a display such as a touch screen or monitor for displaying various information and outputting the various information to the worker, and an inputter such as touch screen and operation key for receiving an inputting operation of various information from the worker. For example, the portable terminal 60 displays, on the display, a screen (e.g., home screen or mode setting screen) on which any of the manual traveling mode and automatic traveling mode of the combine harvester 1 can be set, and sends, to the combine harvester 1, the traveling mode set according to the worker's operation.

The storage 62 stores any program and data for controlling various components and various functions of the portable terminal 60, and, based on the program and data stored in the storage 62, the controller 61 executes an arithmetic process thereby to control the various components and various functions of the portable terminal 60. The storage 62 stores the farm field information of the to-be-worked-on farm field of the combine harvester 1, for example. The farm field information includes the shape, size and positional information (coordinates, etc.) of a farm field edge that constitutes the farm field's external circumference, as well as the shape, size and positional information (coordinates, etc.) of the work area of the farm field. The farm field information also includes un-mowed area data and already mowed area data in the farm field. The un-mowed area data is initially set for the entire farm field, and the area where the combine harvester 1 has performed the manual traveling or automatic traveling is changed from the un-mowed area data to the already mowed area data.

Via a wireless communication antenna, the communicator 63 is communicably connected to the communicator 52 of the combine harvester 1. The controller 61 controls the communicator 63 thereby to wirelessly communicate with the combine harvester 1, and sends and receives various information to and from the combine harvester 1.

The controller 61 of the portable terminal 60 performs the program stored in the storage 62 thereby to operate as a reference traveling line setter 65, a set traveling line setter 66, a recommended traveling line setter 67, and a work display 68. The reference traveling line setter 65, the set traveling line setter 66, the recommended traveling line setter 67, and the work display 68 realize a reference traveling line setting step, set traveling line setting step, recommended traveling line setting step, and work displaying step of the automatic traveling method according to the present invention.

The reference traveling line setter 65 sets a reference traveling line that shows the traveling direction of the combine harvester 1's automatic straight work. So as to set, to the farm field, the reference traveling line including a start point and an end point, the reference traveling line setter 65 enables to receive the setting of the start point and end point in the farm field, and, at the time of the manual traveling in the farm field, displays, on the display, a reference traveling line setting screen (not shown) capable of setting the start point and the end point, for example.

When receiving the setting of the start point, the reference traveling line setter 65 receives, from the combine harvester 1, the position information of the combine harvester 1 positioned at that time by the positioning unit 45 of the combine harvester 1, and sets the start point based on the position information. When receiving the setting of the end point, the reference traveling line setter 65 receives, from the combine harvester 1, the position information of the combine harvester 1 positioned at that time by the positioning unit 45 of the combine harvester 1, and sets the end point based on the position information.

The set traveling line setter 66 sets a set traveling line parallel to the reference traveling line based on the reference traveling line. The set traveling line setter 66 makes the setting of the set traveling line receivable, and displays, on the display section, a set traveling line setting screen (not shown) capable of instructing to set the set traveling line, for example.

For example, when receiving the setting of the set traveling line, the set traveling line setter 66 receives, from the combine harvester 1, the position information of the combine harvester 1 positioned at that time by the positioning unit 45 of the combine harvester 1, sets, as the set traveling line, a straight line parallel to the reference traveling line and passing through the own position of the combine harvester 1, stores the set traveling line in the storage 62, and send the set traveling line to the controller 50 of the combine harvester 1.

For the un-mowed area of the farm field, the recommended traveling line setter 67 sets the recommended traveling line parallel to the reference traveling line. The recommended traveling line setter 67 may set the recommended traveling line so that the automatic straight work is performed in order from the end portion of the un-mowed area based on the un-mowed area data of the farm field information; for example, setting, based on the traveling direction of the reference traveling line, the recommended traveling line as the stroke having a start point at the left rear end of the un-mowed area, storing the recommended traveling line in the storage 62, and sending the recommended traveling line to the controller 50 of the combine harvester 1.

On the display, the work display 68 displays a work screen related to the automatic straight work done by the combine harvester 1. For example, the work display 68, on the work screen, displays a farm field map based on the farm field information, while, based on the farm field information, displaying the un-mowed and the already mowed areas overlapping the farm field map. The work display 68, when the reference traveling line is set by the reference traveling line setter 65, displays the reference traveling line in a state of overlapping the farm field, while the work display 68, when the set traveling line is set by the set traveling line setter 66, displays the set traveling line in a state of overlapping the farm field. Also, from the combine harvester 1, the work display 68 receives the position information of the combine harvester 1 positioned by the positioning unit 45 of the combine harvester 1, and displays, on the farm field map, a simulated diagram of the combine harvester 1 based on the position information of the combine harvester 1. Further, when the recommended traveling line is set by the recommended traveling line setter 67, the work display 68 displays the recommended traveling line together with the set traveling line in a state of overlapping the farm field map.

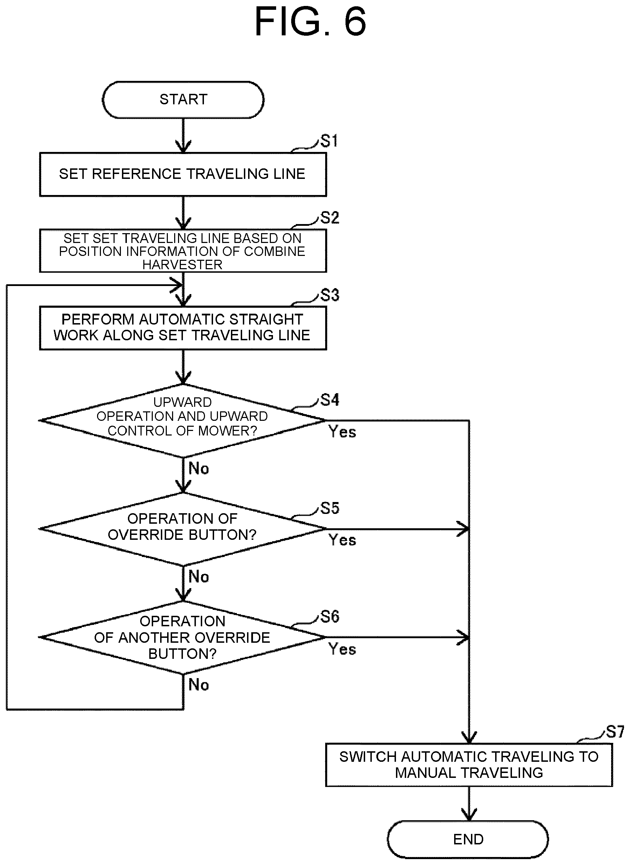

Next, an operation example of the override function by the combine harvester 1 is described with reference to a flowchart in FIG. 6.

The worker first operates the portable terminal 60 of the combine harvester 1 thereby to set, by the reference traveling line setter 65, the reference traveling line showing the traveling direction of the automatic straight work of the combine harvester 1 (step S1).

When manually causing the combine harvester 1 to travel thereby to move the combine harvester 1 to the end portion of the un-mowed area of the farm field, the worker downward operates the auto set button 41 or the mowing up-down button 42 thereby to cause the work instrument elevator 56 to downward control the mower 3 to the work position, and operates the portable terminal 60 thereby to instruct to set the set traveling line. Then, in the portable terminal 60, the set traveling line setter 66 sets the set traveling line parallel to the reference traveling line step S2).

The worker operates the portable terminal 60 and gives an instruction for the automatic straight work, thereby to allow the portable terminal 60 to send, to the combine harvester 1, the automatic straight work's start instruction and the set traveling line. When the controller 50 of the combine harvester 1 receives, from the portable terminal 60, the automatic straight work's start instruction and the set traveling line, the automatic traveler 55 controls the combine harvester 1 in a manner to perform the automatic straight work along the set traveling line (step S3).

When the worker ends the automatic straight work for one stroke of the set traveling line, the worker upward operates the auto lift button 40 or the mowing up-down button 42, thereby to allow the work instrument elevator 56 to upward control the mower 3 to the standby position (step S4: Yes). Then, the switch 57 of the controller 50 detects the shift from the un-mowed area to the already mowed area, and, in response to upward operation of the mower 3 or to the upward control based on the upward operation, switches the automatic traveling of the combine harvester 1 to the manual traveling (step S7).

Even if the up operation of the auto lift button 40 or the mowing up-down button 42 is not performed (step S4: No), the worker, when operating the override button 36 (step S5: Yes) allows the switch 57 to detect the shift from the un-mowed area to the already mowed area and switch the automatic traveling of the combine harvester 1 to the manual traveling (step S7). If any override operation other than those described above is performed on the combine harvester 1 (step S6: Yes), the switch 57 switches the automatic traveling of the combine harvester 1 to the manual traveling (step S7).

The worker operates the combine harvester 1 that has been switched to the manual traveling in this manner, thereby to move the combine harvester 1 to the next stroke. When no override operation is performed on the combine harvester 1 (step S4: No, step S5: No, step S6: No), the combine harvester 1 continues to automatically travel.

As described above, according to the present embodiment, the combine harvester 1 as the example of a work vehicle is provided with the controller 50, and the controller 50 functions as the automatic traveler 55 and the switch 57. The automatic traveler 55 executes the automatic traveling of the combine harvester 1 in the automatic straight work. When detecting, during the executing of the automatic traveling, the shift from the un-mowed area (unworked area) to the already mowed area (already worked area), the switch 57 switches the automatic traveling of the combine harvester 1 to the manual traveling. Specifically, in the combine harvester 1, the controller 50 functions as the work instrument elevator 56, and the work instrument elevator 56 upward/downward controls the mower 3 in response to the upward/downward operation of the mower 3 as the work instrument, and the switch 57, when the mower 3 is upward controlled based on the upward operation of the mower 3, detects the shift from the un-mowed area to the already mowed area.

As a result, when the combine harvester 1 works to the end of one stroke in the un-mowed area in the automatic traveling and detects the shift to the already mowed area, the worker, without a complicated operation, can shift to the manual traveling and move the combine harvester 1 to the next stroke. At this time, merely upward operating the mower 3 can upward control the mower 3, and can switch the automatic traveling to the manual traveling. This reduces the worker's operational burden and improves workability.

In the combine harvester 1 of the present embodiment, if no turning operation or no speed change operation of the combine harvester 1 is performed for a predetermined time or a predetermined distance after detecting the shift from the un-mowed area to the already mowed area and followed by switching from the automatic traveling to the manual traveling, the controller 50 may decelerate or stop the manual traveling of the combine harvester 1.

With this, the combine harvester 1, without the turning operation or speed change operation, automatically decelerates or stops in the switched manual travel, making it possible to improve safety.

In the combine harvester 1 of the present embodiment, the controller 50, by the positioning unit 45, positions the position information of the combine harvester 1, thereby to detect the own position of the combine harvester 1. The work vehicle in the present embodiment includes the combine harvester 1 provided with the mower 3 as the work instrument. When the mower 3 is upward controlled during the executing of the automatic traveling; if the front of the own position is the already mowed area, the controller 50, by the work instrument elevator 56, may upward control the mower 3 based on the upward operation and, by the switch 57, may switch the automatic traveling to the manual traveling.

This allows the combine harvester 1 to travel without the mowing work if the front of the own position is the already mowed area, so the combine harvester 1 can upward control the mower 3 thereby to automatically switch from the automatic traveling to the manual traveling, thus making it possible to prevent erroneous operation due to the status in front of the combine harvester 1, and to improve workability.

In the combine harvester 1 of the present embodiment; during the performing of the automatic traveling, when the upward operation of the mower 3 is performed, the controller 50, if the front of the own position is the un-mowed area, may stop the combine harvester 1.

With this, the combine harvester 1 cannot travel without the mowing work if the front of the own position is the un-mowed area; therefore, when the mower 3 is upward operated, stopping the combine harvester 1 can prevent the combine harvester 1 from entering the un-mowed area with the mower 3 being positioned upward, thus making it possible to prevent erroneous operation due to the state in front of the combine harvester 1 and to improve workability.

In the combine harvester 1 of the present embodiment, the controller 50 is provided with the portable terminal 60, and the portable terminal 60 functions as the reference traveling line setter 65 and the set traveling line setter 66. The reference traveling line setter 65 sets the reference traveling line that shows the traveling direction of the automatic straight work, and the set traveling line setter 66 sets the set traveling line parallel to the reference traveling line based on the reference traveling line. During the executing of the manual traveling, with the traveling direction of the combine harvester 1 being within the predetermined angle relative to the traveling direction of the reference traveling line, the controller 50, when downward controlling the mower 3 based on the downward operation of the mower 3, switches, by the switch 57, the manual traveling to the automatic traveling.

With this, the combine harvester 1, by merely downward operating the mower 3 with the movement direction adjusted to the traveling direction of the reference traveling line, can downward control the mower 3 and can automatically switch the manual traveling to the automatic traveling, thus making it possible to improve workability.

In the combine harvester 1 of the present embodiment, the portable terminal 60 functions as the recommended traveling line setter 67. For the un-mowed area, the recommended traveling line setter 67 sets the recommended traveling line parallel to the reference traveling line. When the controller 50 downward controls the mower 3 thereby to switch the manual traveling to the automatic traveling, if the combine harvester 1 is within the predetermined range from the recommended traveling line in the direction orthogonal to the traveling direction of the reference traveling line, the controller 50 sets the recommended traveling line to the set traveling line thereby to perform the automatic traveling.

With this, even when the combine harvester 1 is located off the un-mowed area, but the combine harvester 1 is within the predetermined range from the recommended traveling line set for the un-mowed area, the combine harvester 1 sets the recommended traveling line as the set traveling line thereby to perform the automatic traveling; therefore, the combine harvester 1 sequentially performs the automatic traveling on the un-mowed area without performing the automatic traveling that is off the un-mowed area, making it possible to improve workability.

In the above embodiment, the example has been described in which, in the combine harvester 1, the auto lift button 40, the auto set button 41, and the mowing up-down button 42 are provided at the main speed change lever 34 of the steerer 9, but the present invention is not limited to this example. For example, in another example, the auto lift button 40, the auto set button 41, and the mowing up-down button 42 may be located on the steerer 9 other than at the main speed change lever 34, and may be operably displayed on the display of the portable terminal 60.

In the embodiment described above, the example has been described in which, in the combine harvester 1, the upward operations of the auto lift button 40, the auto set button 41, and the mowing up-down button 42 and the operation of the override button 36 are override operations, but the present invention is not limited to this example. For example, in another example, other than the upward operations of the auto lift button 40, the auto set button 41 and the mowing up-down button 42, and the operation of the override button 36, the turning operation of the steering wheel 33, and the tilting operation of the main speed change lever 34 or the auxiliary speed change lever 35 may be the override operations.

In the above embodiment, the example has been described in which the switch 57 detects the shift from the un-mowed area to the already mowed area when the mower 3 is upward controlled based on the upward operation of the mower 3, but the present invention is not limited to this. In another example, the switch 57 may detect the shift from the un-mowed area to the already mowed area based on the rotational work's rotational speed (work speed) for the mower 3 to perform the mowing work, thereby to switch the automatic traveling of the combine harvester 1 to the manual traveling.

Specifically, by the rotation detector 3a of the mower 3, the switch 57 detects the rotational work's rotational speed for the mower 3 to perform the mowing work. For example, the rotation detector 3a detects the rotational speed of the scraping reel 14, the scraping auger 16, or the conveyor 18 of the mower 3 as the rotational speed of the rotational work of the mower 3.

When the scraping reel 14, the scraping auger 16 or the conveyor 18's rotational speed (work speed) detected by the rotation detector 3a is the predetermined rotational speed threshold (work speed threshold) or below, the switch 57 determines that the work load is applied to the scraping reel 14, the scraping auger 16 or the conveyor 18, and that the combine harvester 1 is under the mowing work in the un-mowed area. Meanwhile, when the scraping reel 14, the scraping auger 16, or the conveyor 18's rotational speed detected by the rotation detector 3a is over the predetermined rotational speed threshold, the switch 57 determines that no workload is applied to the scraping reel 14, the scraping auger 16 or the conveyor 18, and that the combine harvester 1 is not performing the mowing work in the already mowed area.

Then, during the automatic traveling of the combine harvester 1, when the rotational speed of the scraping reel 14, the scraping auger 16, or the conveyor 18 changes from the rotational speed threshold or below to over the rotational speed threshold, the switch 57 detects that the combine harvester 1 has mowed and passed through the un-mowed area and moved from the un-mowed area to the already mowed area, and switches the automatic traveling of the combine harvester 1 to the manual traveling.

It is sufficient that the switch 57 should detect the shift from the un-mowed area to the already mowed area when determining from the state where the work load is applied to the mower 3 to the state where no work load is applied to the mower 3 ; and this determination is not limited to being made by the result of the rotation detector 3a's detecting of the rotational speed of the rotational work of the mower 3, but may be made by any other means.

In the above embodiment described, the example has been described in which the work vehicle of the present invention includes the normal combine harvester 1, but the present invention is not limited to this example; the work vehicle of the present invention may be any other work vehicles such as a detachable combine harvester, a tractor, a rice planter, a weed cutter, as long as being the one that, for the work, lowers the work instrument for the automatic traveling.

The present invention can be modified as appropriate to the extent not contradicting the gist or idea of the invention that can be read from the claims and the specification as a whole, and the automatic traveling method, work vehicle and automatic traveling system with such modification are also included in the technical concept of the present invention.

### REFERENCE SIGNS LIST

1: combine harvester (work vehicle)
2: traveler
3: mower
3a: rotation detector
9: steerer
19: elevator
34: main speed change lever
36: override button
40: auto lift button
41: auto set button
42: mowing up-down button
45: positioning unit
50: controller
55: automatic traveler
56: work instrument elevator
57: switch
60: portable terminal
61: controller
65: reference traveling line setter
66: set traveling line setter
67: recommended traveling line setter
68: work display

## Claims

1. An automatic traveling method of a work vehicle provided with a work instrument, comprising:
an automatic traveling step that performs automatic traveling of the work vehicle in an automatic straight work; and,
a switching step that switches the automatic traveling of the work vehicle to manual traveling, during the performing of the automatic traveling, when detecting a shift from an unworked area to an already worked area.

2. The automatic traveling method according to 1, further comprising:
a work instrument elevating step that upward/downward controls the work instrument in response to an upward/downward operation of the work instrument,
wherein
the switching step detects the shift from the unworked area to the already worked area, when the work instrument is upward controlled based on the upward operation of the work instrument.

3. The automatic traveling method according to 1, wherein
the switching step detects the shift from the unworked area to the already worked area, when a work speed of the work instrument changes from a predetermined work speed threshold or below to over the work speed threshold.

4. The automatic traveling method according to any one of claims 1 to 3, wherein
when a turning operation or speed change operation of the work vehicle is not performed for a predetermined time or a predetermined distance after the detecting of the shift from the unworked area to the already worked area and the switching from the automatic traveling to the manual traveling, the manual traveling of the work vehicle is decelerated or stopped.

5. The automatic traveling method according to claim 2, further comprising:
an own position detecting step that detects an own position of the work vehicle,
wherein
the work vehicle is a combine harvester provided with a mower as the work instrument, and
when the upward operation of the mower is performed during the performing of the automatic traveling, if a front of the own position is an already mowed area, the work instrument elevating step upward controls the mower based on the upward operation, and the switching step switches the automatic traveling to the manual traveling.

6. The automatic traveling method according to claim 5, wherein
when the upward operation of the mower is performed during the performing of the automatic traveling, if the front of the own position is an un-mowed area, the work vehicle is stopped.

7. The automatic traveling method according to claim 2, further comprising:
a reference traveling line setting step that sets a reference traveling line showing a traveling direction of the automatic straight work, and
a set traveling line setting step that sets a set traveling line parallel to the reference traveling line based on the reference traveling line,
wherein
during the performing of the manual traveling, in a state where a movement direction of the work vehicle is within a predetermined angle relative to the traveling direction of the reference traveling line, and when the work vehicle is downward controlled based on a downward operation of the work instrument, the switching step switches the manual traveling to the automatic traveling.

8. The automatic traveling method according to claim 7, further comprising:
a recommended traveling line setting step that, for an un-mowed area, sets a recommended traveling line parallel to the reference traveling line,
wherein
when the work instrument is downward controlled thereby to switch the manual traveling to the automatic traveling, in a case where the work vehicle is within a predetermined range from the recommended traveling line in a direction orthogonal to the traveling direction of the reference traveling line, the recommended traveling line is set as the set traveling line thereby to perform the automatic traveling.

9. A work vehicle provided with a work instrument, comprising:
an automatic traveler that performs automatic traveling of the work vehicle in an automatic straight work along a predetermined set traveling line; and
a switch that switches the automatic traveling of the work vehicle to manual traveling, during the automatic traveling, when detecting a shift from an unworked area to an already worked area.

10. An automatic traveling system of a work vehicle provided with a work instrument, comprising:
an automatic traveler that performs automatic traveling of the work vehicle in an automatic straight work along a predetermined set traveling line; and
a switch that switches the automatic traveling of the work vehicle to manual traveling, during the performing of the automatic traveling, when detecting a shift from an unworked area to an already worked area.
